Europäisches Patentamt

European Patent Office

Office européen des brevets

(19)

(11) Veröffentlichungsnummer : **0 342 407 B1**

(12) **EUROPÄISCHE PATENTSCHRIFT**

(45) Veröffentlichungstag der Patentschrift :
**03.06.92 Patentblatt 92/23**

(51) Int. Cl.$^5$ : **G07C 7/00**

(21) Anmeldenummer : **89107663.0**

(22) Anmeldetag : **27.04.89**

(54) **Anordnung zum Verschliessen eines Ein-/Ausgabeschlitzes eines Datenerfassungsgerätes.**

(30) Priorität : **02.05.88 DE 8805789 U**

(43) Veröffentlichungstag der Anmeldung :
**23.11.89 Patentblatt 89/47**

(45) Bekanntmachung des Hinweises auf die
Patenterteilung :
**03.06.92 Patentblatt 92/23**

(84) Benannte Vertragsstaaten :
**DE ES FR GB IT**

(56) Entgegenhaltungen :
**EP-A- 0 247 550**
**WO-A-85/04274**
**DE-A- 3 716 486**
**DE-A- 3 743 648**

(56) Entgegenhaltungen :
**GB-A- 2 069 039**
**US-A- 4 482 993**
**PATENT ABSTRACTS OF JAPAN, Band 7, Nr.**
**38 (P-176)[1183], 16. Februar 1983; & JP-A-57**
**189 270**
**PATENT ABSTRACTS OF JAPAN, Band 12, Nr.**
**188 (P-711)[3035], 2. Juni 1988, Seite 123 P 711;**
**& JP-A-62 295 291**

(73) Patentinhaber : **Mannesmann Kienzle GmbH**
**Heinrich-Hertz-Strasse 45**
**W-7730 Villingen-Schwenningen (DE)**

(72) Erfinder : **Helmschrott, Norbert**
**Wasenstr. 94**
**W-7730 Villingen-Schwenningen (DE)**
Erfinder : **Paucker, Jürgen**
**Berliner Str. 54**
**W-7730 Villingen-Schwenningen (DE)**

EP 0 342 407 B1

## Beschreibung

Die Erfindung betrifft eine Anordnung zum Verschließen wenigstens einer an der Frontseite eines Datenerfassungsgerätes befindlichen Öffnung, welcher wenigstens ein Führungsschacht nachgeordnet ist, über welchen mittels geeigneter Transportmittel blattförmige Aufzeichnungsträger in ihre Registrierposition geführt und von dieser ausgegeben werden können.

Bei Datenerfassungsgeräten, bei denen zum sichtbaren Darstellen der Daten blattförmige Aufzeichnungs oder Druckträger verwendet und durch eine im folgenden als Ein-/Ausgabeschlitz bezeichnete Öffnung in das betreffende Gerät eingeführt und diesem wieder entnommen werden, stellt der Ein-/Ausgageschlitz insofern eine Schwachstelle dar, als er eine Eingriffsmöglichkeit bietet und somit Manipulationen ermöglicht. Je nach Einsatzmilieu des Gerätes ist bei offenem Ein-/Ausgabeschlitz ferner eine erhebliche Verschmutzungsgefahr gegeben; auch müssen absichtliche und unabsichtliche Störungen durch Fremdkörper in Kauf genommen werden (z.B. DE-C1-3716486).

Eine typische Gerätegattung, bei der wegen des dokumentarischen Wertes der Aufzeichnungen einerseits ein hohes Maß an Manipulationssicherheit erforderlich ist, andererseits eine erhöhte Verschmutzungsgefahr besteht, sind Fahrtschreiber. Für solche Geräte eine nach außen öffnende Klappe vorzusehen, die, um eine Benutzungsbefugnis zu realisieren, zweckmäßigerweise verschließbar sein müßte, ist weder aus ästhetischen, noch aus Handhabungsgründen sinnvoll und würde den Vorteil der Ein-/Ausgabe der Aufzeichnungträger durch einen Schlitz vermindern.

Die Verriegelung des Ein-/Ausgabeschlitzes bzw. des dem Ein-/Ausgabeschlitz folgenden Führungsschachtes müßte somit innerhalb des Gerätes vorgenommen werden, was jedoch wegen des Raumbedarfs auf erhebliche konstruktive Schwierigkeiten stößt. Insbesondere bei Fahrtschreibern kommt hinzu, daß die Aufzeichnungsträger relativ oft ein-/ausgegeben werden müssen, d. h. nicht nur aufgrund der festgelegten Registrierkapazität beispielsweise täglich, sondern auch bei Fahrerwechsel und bei Polizeikontrollen, so daß extreme Anforderungen an die Funktionssicherheit einer derartigen, an sich untergeordneten Verschließanordnung gestellt werden müssen und der damit verbundene Aufwand für in Großserie zu fertigende Geräte grundsätzlich nicht realisierbar erscheint.

Die der Erfindung zugrunde liegende Aufgabe bestand somit darin, eine Anordnung zum Verschließen eines dem Aufzeichnungträger eines Datenerfassungsgerätes zugeordneten Ein-/Ausgabeschlitzes bzw. eines Führungsschachtes zu schaffen, die sowohl eine gute Serienfertigungsfähigkeit aufweist, als auch den Anforderungen an Funktionssicherheit gerecht wird und möglichst wenig zusätzlichen Raumbedarf erforderlich macht.

Die Lösung dieser Aufgabe sieht vor, daß eine quer zur Führungsebene des Aufzeichnungsträgers bewegbare Blende vorgesehen ist, daß parallel zur Führungsebene eine Antriebswelle angeordnet ist und daß die Blende auf ein und derselben Seite an zwei voneinander entfernten Stellen mit der Antriebswelle getrieblich gekoppelt ist.

Ein bevorzugtes Ausführungsbeispiel ist dadurch gekennzeichnet, daß die als flaches Teil ausgebildete Blende zwischen der Frontwand des Gerätegehäuses und einer sich anschließenden Stirnwand eines den Führungsschacht bildenden Gestells geführt und die Antriebswelle in einer in der Stirnwand des Gestells ausgebildeten Nut gelagert ist und daß auf der Antriebswelle zwei Zahnräder befestigt sind, welchen an der Blende angebrachte Verzahnungen zugeordnet sind.

Die Erfindung bietet den Vorteil, daß durch die Verwendung einer ebenflächigen und in einer Ebene geführten Blende eine besonders flache und raumsparende, letzten Endes durch das versenkte Anordnen der Antriebswelle und das Ausbilden einer der Blende zugeordneten Führungstasche eine vollständige Integration der Verschließanordnung in ein gegebenes Gerätekonzept erzielbar ist. Die Verschließanordnung zeichnet sich ferner durch einfache Bauteile, geringen Teileaufwand und besonders einfache Montage aus. D. h. für die Montage der eigentlichen, für die Serienfertigung gut geeigneten Verschließanordnung sind folgende Schritte erforderlich: Einlegen der Antriebswelle in die Nut im Gestell, Auflegen der Blende und funktionsfähiges Verbinden von Antriebswelle und Blende lediglich durch Befestigen des Gehäuses.

Ein weiterer Vorteil ist darin zu sehen, daß durch den erfindungsgemäßen Parallelantrieb der Blende ein Verkanten des relativ dünnen Blendenblechs auch bei einem bedingt durch die Breite der verwendeten Aufzeichnungträger verhältnismäßig breiten Ein-/Ausgabeschlitz vermieden und somit eine sichere Funktion gegeben ist. Ferner sei noch erwähnt, daß die erfindungsgemäße Verschließanordnung bei entsprechender getrieblicher Verbindung sowohl motorisch als auch mittels eines handbetätigten Schlosses betätigbar ist. Auch ist die Verschließanordnung nicht auf Fahrtschreiber beschränkt, sondern sie kann in unterschiedlichsten registrierenden oder druckenden Datenerfassungsgeräten, bei denen die Ein-/Ausgabe der Datenträger durch einen Schlitz erfolgt, Anwendung finden, auch in solchen, bei denen als Datenträger Datankarten, beispielsweise Chipkarten, dienen.

Im folgenden seien zwei Ausführungsbeispiele der Erfindung anhand der Zeichnungen näher erläutert. Das eine Ausführungsbeispiel stellt einen Fahrtschreiber dar, in welchem gleichzeitig auf zwei parallel liegenden Diagrammscheiben registriert werden kann, das andere Ausführungsbeispiel einen solchen mit nur einer Aufzeichnungsebene.

Es zeigen

FIGUR 1 eine Frontansicht eines erfindungsgemäßen Fahrtschreibers,

FIGUR 2 eine teilweise geschnittene, schematisierte Seitenansicht eines Fahrtschreibers gemäß FIGUR 1 mit geschlossenen Ein-/Ausgabeschlitzen,

FIGUR 3 eine teilweise geschnittene, schematisierte Seitenansicht eines Fahrtschreibers gemäß FIGUR 1 mit geöffneten Ein-/Ausgabeschlitzen,

FIGUR 4 eine teilweise Draufsicht des Fahrtschreibers gemäß FIGUR 1 mit abgenommenem und perspektivisch versetzt dargestelltem Gehäuseteil und Blende,

FIGUR 5 eine vergrößerte Darstellung der Einzelheit X in FIGUR 4,

FIGUR 6 einen Getriebeplan gemäß des Pfeils in FIGUR 4,

FIGUR 7 eine Draufsicht auf ein weiteres Ausführungsbeispiel der Erfindung, welches eine besonders schmale Bauform des betreffenden Fahrtschreibers gestattet,

FIGUR 8 einen Teilschnitt entsprechend der Schnittlinie A im Ausführungsbeispiel gemäß FIGUR 7.

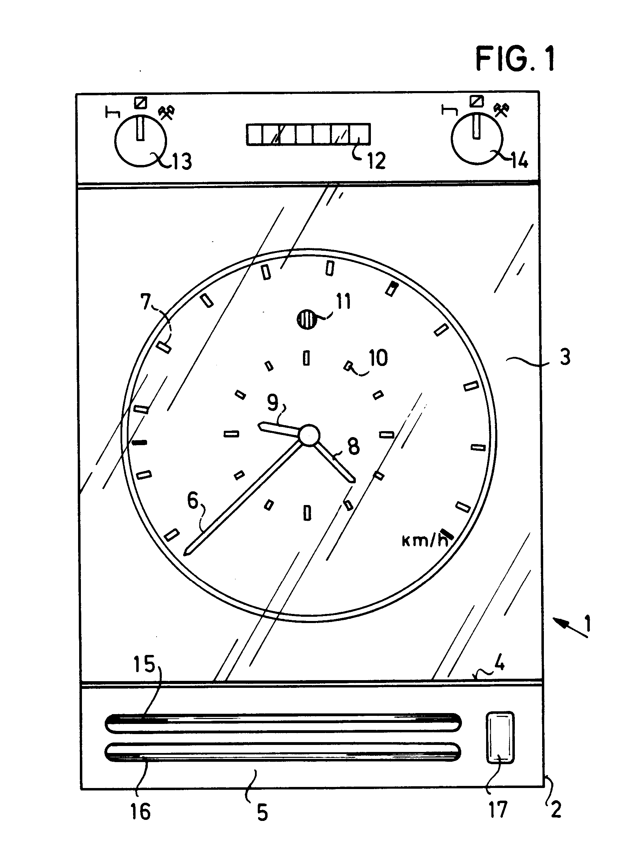

Die FIGUR 1 zeigt einen Fahrtschreiber 1 als ein autonomes Gerät mit einem Gehäuse 2 und einer Frontscheibe 3, welche die in einem Fensterausschnitt 4 der Frontwand 5 sichtbaren Anzeigemittel, beispielsweise die Geschwindigkeitsanzeigemittel 6 und 7, die Zeitanzeigemittel 8, 9 und 10 sowie eine Warnlampe 11 abdeckt. Das Gerät, das hinsichtlich seiner Anzeigemittel dem Charakter herkömmlicher Fahrtschreiber entspricht, gestattet jedoch durch die frontseitige Anordnung der Ein-/Ausgabeschlitze einen frontflächenbündigen Einbau und sozusagen eine bausteinartige Verwendung in einem Armaturenbrett. Außer einem Fenster 12 für die Beobachtung des Streckenzählwerkes des Fahrtschreibers und außer den Einstellknöpfen 13 und 14 zum Anwählen der verschiedenen Arbeitszeitarten sind an der Frontwand 5 zwei Ein-/Ausgabeschlitze 15 und 16 für die in dem betreffenden Fahrtschreiber von Fahrer und Beifahrer als Aufzeichnungsträger zu benutzenden Diagrammscheiben vorgesehen.

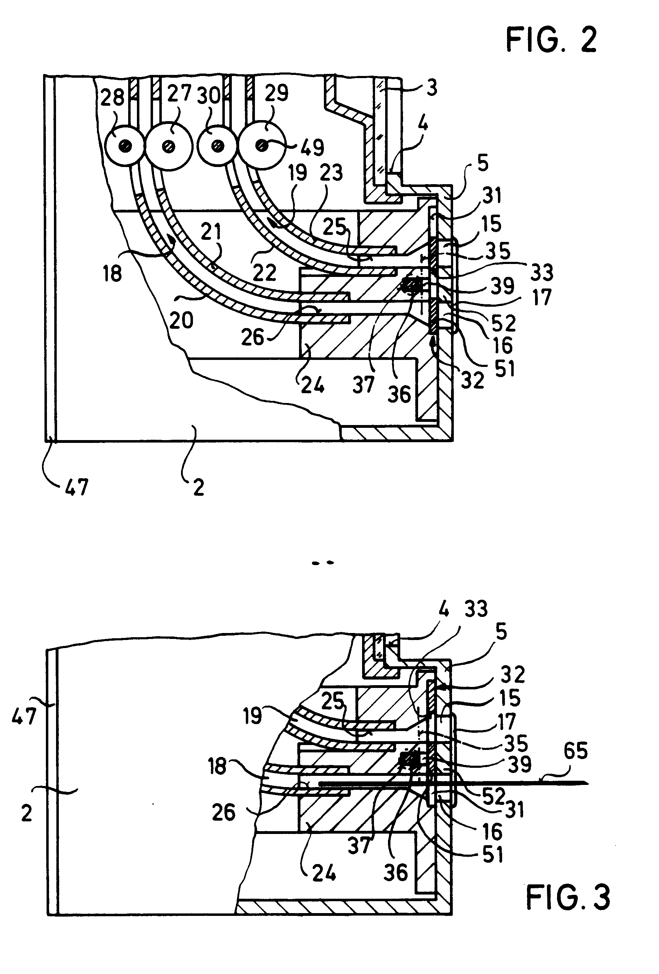

Eine Taste 17, die verschließbar und/oder als Leuchttaste ausgebildet sein kann, dient dem Ansteuern der Transportantriebe für das Einziehen oder Ausgeben der Diagrammscheiben. Es ist ferner denkbar, jedem Ein-/Ausgabeschlitz 15, 16 eine Taste zuzuordnen und z. B. Leuchtdioden vorzusehen, mit denen der jeweilige Zustand "belegt" oder "frei" der den Ein-/Ausgabeschlitzen 15, 16 nachgeordneten Führungsschächte 18 und 19 (FIGUR 2) anzeigbar ist.

Wie weiter aus FIGUR 2 hervorgeht, werden die wegen der beabsichtigten Registrierposition der Diagrammscheiben in Ebenen parallel zur Frontfläche des Fahrtschreibers gekrümmt ausgebildeten Führungsschächte 18 und 19 von Platten 20, 21 und 22, 23 gebildet, die gleichzeitig als Montageplatten für ein, weil nicht erfindungswesentlich nicht dargestelltes Geschwindigkeitsmeßwerk, ein Laufwerk für die Zeitanzeige und den Registrierantrieb sowie für die vorgesehenen Registriermittel dienen.

Die Platten 20, 21 und 22, 23 bilden zusammen mit einem Halter 24, in welchem sie gefaßt sind, ein Gestell, welches mit dem Gehäuse 2 verbunden ist. In dem Halter 24 sind Schlitze 25 und 26 ausgebildet sind, die eine durchgehende Verbindung zwischen den Führungsschächten 18 und 19 und den Ein-/Ausgabeschlitzen 15 und 16 in der Frontwand 5 des Gehäuses 2 schaffen. Mit 27, 28 und 29, 30 sind durch nicht näher bezeichnete Öffnungen in den Platten 20, 21 und 22, 23 in die Führungsschächte 18 und 19 eingreifende Transport- und Gegendruckrollenpaare bezeichnet.

Die FIGUR 2 zeigt ferner, daß in dem Halter 24 eine Freisparung 31 vorgesehen ist, mittels der beim Zusammenfügen von Gehäuse 2 und Halter 24 eine Führungstasche gebildet wird, in der eine flache Blende 32 gelagert ist. An der Blende 32, die mit einem Schlitz 33 versehen ist, sind an ein und derselben Seite an zwei voneinander entfernten Stellen Zahnleisten 34 und 35 angebracht, über die die Blende 32 mit auf einer Antriebswelle 36 befestigten Ritzeln 37 und 38 in getrieblicher Verbindung steht. Dabei ist die Antriebswelle 36 in einer in dem Halter 24 bzw. an der Stirnwand des Halters 24, und zwar in vorteilhafter Weise zwischen den Schlitzen 25 und 26 und parallel zu diesen ausgebildeten Nut 39 lose gelagert. Es seinoch ewähnt, daß die getriebliche Verbindung zwischen der Antriebswelle 36 und der Blende 32 auch mittels einer Friktionsverbindung, z. B. durch auf der Antriebswelle 36 angeordnete Rollen, die unmittelbar auf die Blende 32 einwirken, realisiert werden kann.

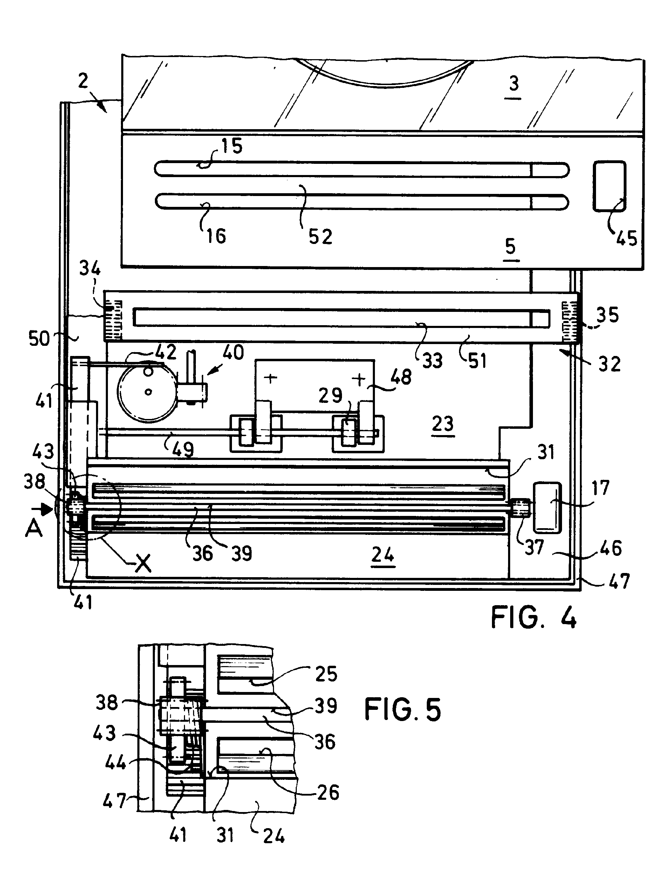

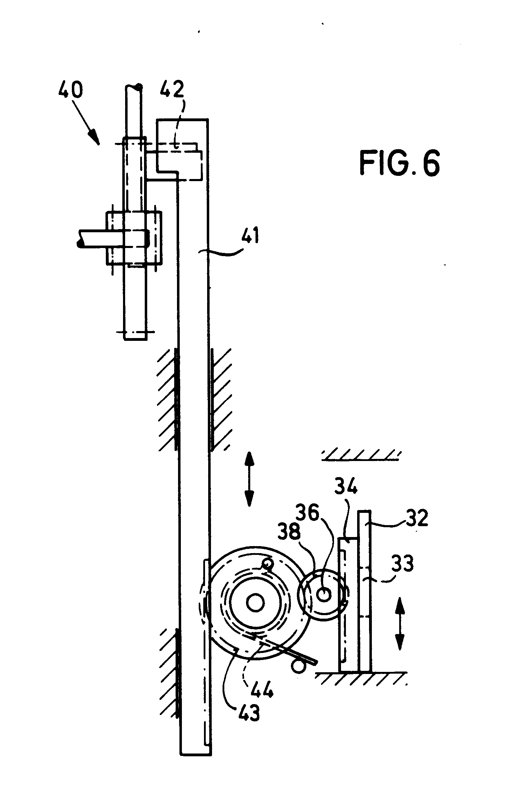

Die Stellbewegung der Antriebswelle 36 und somit das Betätigen der Blende 32 erfolgt, wie FIGUR 4 zeigt und erläuternd auch aus FIGUR 6 hervorgeht, ausgehend von einem nicht dargestellten Motor, der eine mechanische Schalteinrichtung 40 antreibt, über eine in geeigneter Weise gelagerte Zahnstange 41, welche einerseits mittels eines einen Überhub erlaubenden, federnden Armes 42 mit der mechanischen Schalteinrichtung 40 in Wirkverbindung steht, andererseits über ein Zwischenrad 43 mit dem auf der Antriebswelle 36 angeordneten Ritzel 38 kämmt. Eine dem Zwischenrad 43 zugeordnete Schlingfeder 44 dient als Rückstellfeder.

Zu FIGUR 4 sei der Vollständigkeit halber noch erwähnt, daß mit 45 eine Öffnung im Gehäuse 2 für den Durchtritt der Taste 17 bezeichnet ist und daß die Taste 17 einer Montage-oder Leiterplatte 46 zugeordnet sein kann, während mit 47 eine dem Gehäuse 2 zugeordnete Rückwand bezeichnet ist. Außerdem ist in FIGUR 4 ein mit der Platte 23 verbundener Lagerbock 48 dargestellt, in welchem eine das Transportrollenpaar 29 tragende Welle 49, die von einem Laufwerk 50 angetrieben wird, gelagert ist.

Wie bereits angedeutet, weist die Schalteinrichtung 40 einen gewissen Überhub auf, d. h. der Schalthub ist derart eingestellt, daß die Blende 32 mit Sicherheit an den den Hub der Blende 32 begrenzenden Stirnflächen der Freisparung 31 anschlägt, wodurch eine exakte Blendenstellung in bezug auf die Führungsschächte bzw. Ein-/Ausgabeschlitze erzielt wird. In dem Falle, daß gleichzeitig beide Ein-/Ausgabeschlitze 15, 16 entweder offen oder geschlossen sind, entspricht der Hub der erfindungsgemäß vorgesehenen Blende im wesentlichen, d. h. mit einer gewissen Überlappung, lediglich einer Schlitzhöhe und erfordert somit die geringste Bauhöhe. In der geöffneten Stellung wird der Schenkel 51 der Blende 32 von dem Steg 52 zwischen den Ein-/Ausgabeschlitzen 15 und 16 verdeckt, während in der geschlossenen Stellung der um das Maß der beiderseitigen Überlappung schmälere Schlitz 33 in der Blende 32 hinter dem Steg 52 steht. Im anderen Falle, d. h. daß die Ein-/Ausgabeschlitze 15, 16 sowohl gleichzeitig geschlossen, als auch wechselseitig geöffnet sein sollen, ist der doppelte Blendenhub einer durchgehend geschlossenen Blende erforderlich.

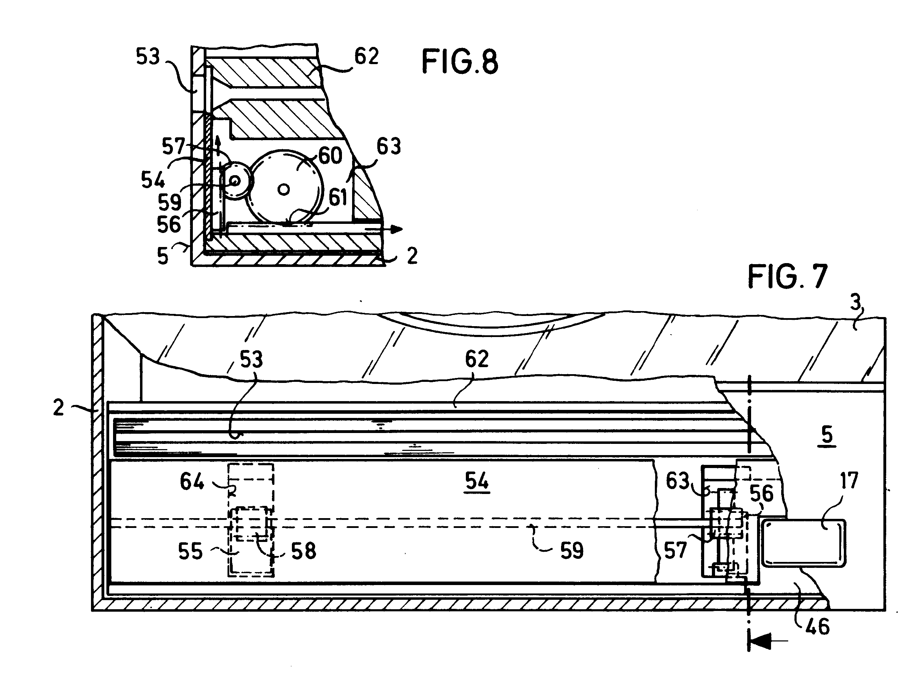

Das Ausführungsbeispiel gemäß FIGUR 7 und FIGUR 8 zeigt ein Datenerfassungsgerät mit lediglich einem Ein-/Ausgabeschlitz 53, welchem eine Blende 54 zugeordnet ist, die in diesem Falle als ein geschlossenes Teil ausgebildet sein kann. An der Blende 54 sind ebenfalls zwei Zahnleisten 55 und 56 angebracht, jedoch derart, daß sie innerhalb der Länge des Ein-/Ausgabeschlitzes 53 liegen. Dementsprechend sind auch die mit den Zahnleisten 55 und 56 in Eingriff stehenden Ritzel 57 und 58, von denen eines analog zu dem bereits beschriebenen Antrieb über ein Zwischenrad 60 mit einer antreibenden Zahnstange 61 in Eingriff steht, auf der Antriebswelle 59 befestigt.

Diese Anordnung gestattet eine lediglich durch die Schlitzbreite bedingte Bauform eines Gerätes, bei dem die Taste 17 außerhalb des Bewegungsbereichs der in geeigneter Weise freigesparten Blende 54 angeordnet ist. In dem betreffenden Gestell 62 sind demgemäß geeignete Aussparungen 63 und 64 vorgesehen, die für die Welle 59 sowie die Blende 54 zusätzlich als seitliche Führung wirksam sind. Mit 65 ist in FIGUR 3 ein Aufzeichnungsträger bezeichnet.

## Patentansprüche

1. Anordnung zum Verschließen wenigstens einer an der Frontseite (5) eines Datenerfassungsgerätes (1) befindlichen Öffnung (15,16), welcher wenigstens ein Führungsschacht (18,19) nachgeordnet ist, über welchen mittels geeigneter Transportmittel (27,28,29,30) blattförmige Aufzeichnungsträger (65) in ihre Registrierposition geführt und von dieser ausgegeben werden können,
dadurch gekennzeichnet,
daß eine quer zur Führungsebene des Aufzeichnungsträgers (65) bewegbare Blende (32) zum Verschließen der Öffnung (15,16) vorgesehen ist,
daß parallel zur Führungsebene der Blende (32) eine Antriebswelle (36) angeordnet ist und
daß die Blende (32) auf ein und derselben Seite an zwei voneinander entfernten Stellen (34,35) mit der Antriebswelle (36) getrieblich gekoppelt ist.

2. Anordnung nach Anspruch 1,
dadurch gekennzeichnet,
daß die als flaches Teil ausgebildete Blende (32) zwischen der Frontwand (5) des Gerätegehäuses (2) und einer sich anschließenden Stirnwand eines den Führungsschacht (18 und/oder 19) bildenden Gestells (20, 21, 22, 23, 24) geführt und die Antriebswelle (36) in einer in der Stirnwand des Gestells (20, 21, 22, 23, 24) ausgebildeten Nut (39) gelagert ist.

3. Anordnung nach Anspruch 1,
dadurch gekennzeichnet,
daß auf der Antriebswelle (36) zwei Zahnräder (37, 38) befestigt sind, welchen an der Blende (32) angebrachte Verzahnungen (34, 35) zugeordnet sind.

4. Anordnung nach Anspruch 1,
dadurch gekennzeichnet,
daß die Antriebswelle (36) getrieblich mit einer motorisch betätigten mechanischen Schalteinrichtung (40) in Verbindung steht und daß auf die getriebliche Verbindung (38, 43, 41, 42) eine Rückstellfeder (44) einwirkt.

5. Anordnung nach Anspruch 1,

EP 0 342 407 B1

dadurch gekennzeichnet,
daß für ein Gerät mit zwei Führungsschächten (18, 19) eine mit einem Schlitz (33) versehene Blende (32) Anwendung findet und daß die Breite des einen Schenkels (51) der Blende (32) gleich oder kleiner ist als die Breite des Steges (52) zwischen den Ein-/Ausgabeschlitzen (15, 16) in der Frontwand (5).

6. Anordnung nach Anspruch 1,
dadurch gekennzeichnet,
daß die Antriebswelle (36) getrieblich mit einem Schloß in Wirkverbindung steht.

**Claims**

1. Arrangement for closing at least one opening (15, 16) which is located at the front side (5) of a data acquisition unit (1) and downstream of which there is arranged at least one guide passageway (18, 19) through which, by means of suitable transporting means (27, 28, 29, 30), sheet-shaped record carriers (65) can be guided into their recording position and can be ejected therefrom,
characterized in that
a panel (32) which is movable transversely with respect to the plane of guidance of the record carrier (65) is provided for closing the opening (15, 16),
in that a drive shaft (36) is arranged parallel to the plane of guidance of the panel (32), and
in that the panel (32), on one and the same side, is coupled by way of gears to the drive shaft (36) at two points (34, 35) which are remote from one another.
2. Arrangement according to Claim 1,
characterized in
that the panel (32) constructed as a flat part is guided between the front wall (5) of the unit housing (2) and an adjacent end wall of a mount (20, 21, 22, 23, 24) forming the guide passageway (18 and/or 19) and the drive shaft (36) is mounted in a groove (39) constructed in the end wall of the mount (20, 21, 22, 23, 24).
3. Arrangement according to Claim 1,
characterized in that
there are secured on the drive shaft (36) two toothed wheels (37, 38) with which toothings (34, 35) mounted on the panel (32) are associated.
4. Arrangement according to Claim 1,
characterized in that
the drive shaft (36) is in geared connection with a motor-actuated mechanical switching device (40), and in that a restoring spring (44) acts on the geared connection (38, 43, 41, 42).
5. Arrangement according to Claim 1,
characterized in that
a panel (32) provided with one slot (33) is used for a unit having two guide passageways (18, 19), and in that the width of one leg (51) of the panel (32) is equal to or smaller than the width of the web (52) between the input/output slots (15, 16) in the front wall (5).
6. Arrangement according to Claim 1,
characterized in that
the drive shaft (36) is in active geared connection with a lock.

**Revendications**

1. Dispositif pour la fermeture d'au moins un orifice (15, 16) situé sur la face frontale (5) d'un appareil d'acquisition de données (1), auquel est associé en aval au moins un puits de guidage (18, 19), par l'intermédiaire duquel il est possible, à l'aide de moyens de transport appropriés (27, 28, 29, 30), d'acheminer des supports d'enregistrement (65) en forme de feuille à leur position d'enregistrement et de les en sortir,
caractérisé par le fait
qu'il est prévu, pour la fermeture dudit orifice (15, 16), un cache (32) mobile transversalement au plan de guidage du support d'enregistrement (65),
qu'un arbre d'entraînement (36) est disposé parallèlement au plan de guidage du cache (32), et
que, à deux endroits (34, 35) éloignés l'un de l'autre, d'un seul et même côté, le cache (32) est fonctionnellement accouplé, avec l'arbre d'entraînement (36).
2. Dispositif selon la revendication 1,
caractérisé par le fait

5

que le cache (32) réalisé sous la forme d'un élément plat est guidé entre le panneau frontal (5) du boîtier d'appareil (2) et un panneau frontal s'y rajoutant un bâti (20, 21, 22, 23, 24) constituant le puits de guidage (18 et/ou 19) et que l'arbre d'entraînement (36) est monté dans une rainure (39) usinée dans le panneau frontal dudit bâti (20, 21, 22, 23, 24).

3. Dispositif selon la revendication 1,
caractérisé par le fait
que sur l'arbre d'entraînement (36) sont fixées deux roues dentées (37, 38) auxquelles sont associées des dentures (34, 35) pratiquées sur le cache (32).

4. Dispositif selon la revendication 1,
caractérisé par le fait
que l'arbre d'entraînement (36) est fonctionnellement relié à un dispositif de déplacement mécanique (40) à actionnement motorisé et que la liaison fonctionnelle (38, 43, 41, 42) subit l'action d'un ressort de rappel (44).

5. Dispositif selon la revendication 1,
caractérisé par le fait
que pour un appareil à deux puits de guidage (18, 19), l'on utilise un cache (32) pourvu d'une fente (33) et que la largeur de l'une des branches (51) du cache (32) est égale ou inférieure à la largeur de la traverse (52) située entre les fentes d'entrée/sortie (15, 16) ménagés dans le panneau frontal (5).

6. Dispositif selon la revendication 1,
caractérisé par le fait
que l'arbre d'entraînement (36) coopère fonctionnellement avec une serrure.

# FIG. 1

FIG. 2

FIG. 3

FIG. 4

FIG. 5

FIG.6

FIG.8

FIG.7